# EUROPEAN PATENT APPLICATION

(11) **EP 4 657 685 A1**
(43) Date of publication of application: **03.12.2025**
(21) Application number: 25171880.5
(22) Date of filing: 23.04.2025
(51) Int. Cl.: H02G 15/064, H01B 17/30, H01B 17/34, H02G 15/22

(54) **WET-TYPE OUTDOOR CABLE TERMINATION**

(30) Priority: 30.05.2024 IT 202400012337
(71) Applicant: Prysmian S.p.A., 20126 Milan (IT)
(72) Inventor: BOFFI, Paolo, 23900 Lecco (IT); FERTI, Andrea, 20900 Monza (IT)
(74) Representative: Praxi Intellectual Property Milano

(57) **Abstract**

The present disclosure relates to a wet-type outdoor cable termination (1) comprising:
- a tubular insulation body (2) extending along a longitudinal axis (X-X) between an upper end and a lower end and delimiting a main chamber (13) adapted to be at least partially filled with an electrically insulating fluid;
- a pass-through bottom plate (18) mechanically connected to the lower end of the tubular insulation body (2);
- a stress cone (9) housed within the tubular insulation body (2), adapted to be fitted to an end portion of an electric cable (100); and
- a segregating tube (12) coaxially extending within the tubular insulation body (2) between the stress cone (9) and the pass-through bottom plate (18), surrounding and contacting at least a lower portion of the stress cone (9) and defining a safety chamber (14) adapted to partially house the end portion of the electric cable, wherein the segregating tube (12) comprises at least one corrugated portion (16) making the segregating tube (12) flexible.

## Description

### BACKGROUND

### Technical field

The present disclosure relates to a wet-type outdoor termination for electrical cables, in particular for high voltage (HV) electrical cables.

In the present description and in the attached claims, the term "high voltage" is used to refer to a voltage above 30 kV.

### Description of the Related Art

Typically, a HV electrical cable includes one cable core comprising one or more conductors covered by an insulation system. The insulation system is sequentially formed by an inner semiconductive layer, an insulating layer, an outer semiconductive layer. The insulation system is generally sequentially surrounded by a metal screen and an outer protective jacket. Before assembly operations between the termination and the cable, an end portion of the cable is subjected to cut and peeling procedures so as to present, one adjacent to the other, a first length of exposed outer semiconductive layer, a second length of exposed insulating layer and a third length of exposed electric conductor.

A wet-type cable termination generally comprises a tubular insulating (either polymeric or ceramic) body and an electric field control element, commonly named "stress cone", both adapted to house the cable end portion, the stress cone being arranged in a radially inner position with respect to the tubular insulating body. The stress cone comprises a semiconductive portion and mitigates and controls the electric stress distribution where the outer semiconductive layer of the cable is interrupted.

The space between the stress cone and the tubular insulating body is filled with an electrically insulating fluid, typically a dielectric oil, such as silicone, or a gas, such as sulfur hexafluoride (SF6).

In order to protect the cable outer semiconductive layer and, in some instance, the stress cone semiconductive portion from any possible chemical interaction with the insulating fluid, a segregating equipment can be installed around and in contact with the lower portion of the stress cone to cover the above-mentioned critical part/s. Possible solutions already available as segregating equipment include rigid (e.g. metallic or polymeric) segregating tubes, and/or tapes or gaskets.

For example, US 8,525,025 B2 relates to a direct current cable termination apparatus comprising a tubular partition which is positioned around the terminal portion of the cable and separates the space into a first chamber and a second chamber. The partition may be made of an electrically insulating and polymer-containing material, for example glass fibre-reinforced epoxy. The first chamber is filled with an electrically insulating first fluid. The conductive shield terminates inside the second chamber, and the electric field control member is located within the second chamber. The partition is physically connected to the electric field control member. The partition has a periphery which may be electrically conductive.

WO 2023/190975 A1 relates to a power cable termination structure where an insulating fluid is applied to cover the exposed area of the conductor and outer semiconductive layer. An insulator tube contains the terminal end portion of the power cable and is filled with an insulating fluid. A metal tube is configured to be able to slide relative to a lower flange portion in response to expansion and contraction of the power cable. The power cable is inserted into the metal tube, and the upper end of the metal tube and the peeled portion of the outer semiconductive layer of the power cable are sealed by a sealing structure. The seal structure prevents the insulating fluid from penetrating into the inner part of the metal tube. The sealing structure is made of, for example, self-bonding tape and heat shrink tubing.

CN 209267137 U relates to a cable terminal. At least one protective layer covering the cable is provided between the semiconducting part and the flange collar. A shrink tube capable of shrinking and sealingly covering the protective layer, the semiconducting part and the flange collar is also provided between the semiconducting part and the flange collar. The shrink tube is a flexible tube that can automatically shrink under specified conditions and is generally a rubber shrink tube. The protective layer includes a semiconductive tape layer and an insulating layer covering the semiconductive tape layer.

Due to thermal variations occurring during the operative loading cycles, the electrical cable end connected to the termination may be subjected to axial and radial expansions and contractions, leading to longitudinal and lateral movements, whereas a steady contact between the segregating equipment and the stress cone should be ensured to preserve the sought protection. Rigid tubes require strict rules to be implemented in the installation of the cable, otherwise the contact with the stress cone would be unsteady during the longitudinal and lateral movements of the cable as a consequence of the loading cycles. Besides being uncoupled during thermal cycles, tapes, gaskets and polymeric portions in general can be deteriorated by the fluid over time, thus losing their protective function.

### SUMMARY OF THE INVENTION

The Applicant therefore aims at providing a wet-type outdoor cable termination which allows axial and radial expansions of the electrical cable due to thermal variations occurring during the load cycles thereof, while maintaining at the same time a steady contact between the segregating element and the stress cone of the termination thus avoiding insulating fluid leakage.

The Applicant has found that providing a wet-type outdoor termination with a segregating tube having a corrugated central portion, making it flexible in longitudinal and lateral directions, allows to maintain the quality of protection provided by a rigid segregating tube, without affecting the reliability of the cable termination during its service, in particular by maintaining the contact between the cable and the stress cone during the longitudinal/lateral movements of the cable as a consequence of the loading cycles.

Accordingly, the present disclosure relates to a wet-type outdoor termination comprising:
- a tubular insulation body extending along a longitudinal axis between an upper end and a lower end and delimiting a main chamber adapted to be at least partially filled with an electrically insulating fluid;
- a pass-through bottom plate mechanically connected to the lower end of the tubular insulation body;
- a stress cone housed within the tubular insulation body, adapted to be fitted to an end portion of an electric cable; and
- a segregating tube coaxially extending within the tubular insulation body between the stress cone and the pass-through bottom plate, surrounding and contacting at least a lower portion of the stress cone and defining a safety chamber adapted to partially house the end portion of the electric cable, wherein the segregating tube comprises at least one corrugated portion making the segregating tube flexible.

In an embodiment, the segregating tube may be made of a material selected from metallic material or of polymeric material or both.

**In** an embodiment, the segregating tube is made of a material comprising at least one metal. The metal of the segregating tube may be amagnetic. A suitable metal for the segregating tube of the present disclosure may be stainless steel.

In an embodiment, the segregating tube is made of an electrically conductive material.

In an embodiment, the safety chamber is free from electrically insulating fluid.

**In** an embodiment, the at least one corrugated portion of the segregating tube is arranged between two opposite smooth portions formed in a single piece with the corrugated portion.

In an embodiment, the at least one corrugated portion and the smooth portions of the segregating tube may be formed in the same or different material. For example, the at least one corrugated portion and the smooth portions may be both made of a metal but in different alloys. For example, the at least one corrugated portion and the smooth portions may be made of different grades of stainless steel.

In an embodiment, the stress cone delimits a channel for the fitting of the cable end portion. The stress cone comprises a semiconductive portion and an insulating sleeve partially embedding the semiconductive portion. The part of the semiconductive portion embedded in the insulating sleeve is also called "deflector".

The semiconductive portion of the stress cone is adapted to be at least partially in direct contact with an outer semiconductive layer of the electric cable end portion. In some embodiments the semiconductive portion is fully encircled by the insulating sleeve, in other embodiments the semiconductive portion extends out of the insulating sleeve at the lower portion of the stress cone.

The segregating tube may be in direct contact with the insulating sleeve or with the semiconductive portion extending out of the insulating sleeve.

In an embodiment, at an upper end the segregating tube comprises a first flange for the mechanical connection to the stress cone, and at a lower end a second flange for the mechanical connection to the pass-through bottom plate.

In an embodiment, the first and/or the second flange may be welded to the smooth portions of the segregating tube.

### BRIEF DESCRIPTION OF THE DRAWINGS

Further characteristics and advantages will be more apparent from the following description of some embodiments given as a way of an example with reference to the enclosed drawings in which:
Figure 1 a sectional view, taken along a longitudinal plane, of a wet-type outdoor cable termination according to an embodiment of the present disclosure,
**Figure** 2 is a side view of a segregating tube of the termination according to an embodiment of the present disclosure.

### DETAILED DESCRIPTION

For the purpose of the present description and of the appended claims, except where otherwise indicated, all numbers expressing amounts, quantities, percentages, and so forth, are to be understood as being modified in all instances by the term "about". Also, all ranges include any combination of the maximum and minimum points disclosed and include any intermediate ranges therein, which may or may not be specifically enumerated herein.

For the purpose of the present description and of the appended claims, the words "a" or "an" are used to describe elements and components of the invention. This is done merely for convenience and to give a general sense of the invention. In this description and claims should be read to include one or at least one and the singular also includes the plural unless it is obvious that it is meant otherwise.

The present disclosure, in at least one of the aforementioned aspects, can be implemented according to one or more of the following embodiments, optionally combined together.

In the present description and claims, terms like "upper" and "lower" are used to indicate positions within the cable termination intended standing vertical, as in operating condition.

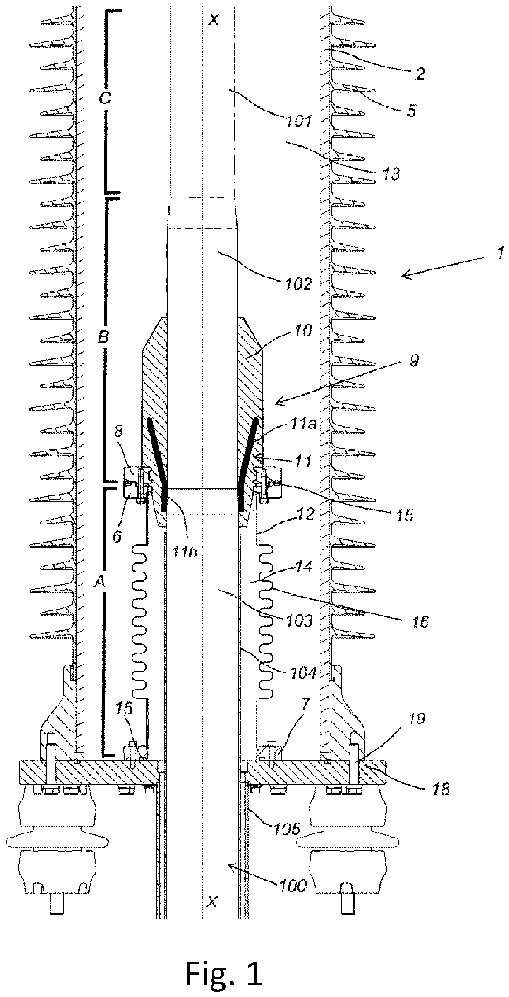

Figure 1 shows an embodiment of a wet-type high voltage HV cable termination 1 and an end portion of a HV power cable 100 housed therein.

The power cable 100 as shown in Figure 1 comprises an electrically conductive core 101 and a cable insulation system surrounding the electrically conductive core 101. The cable insulation system comprises a cable inner semiconductive layer (not illustrated) surrounding and in contact with the electrically conductive core 101, a cable insulating layer 102, surrounding and in contact with the inner semiconductive layer, and a cable outer semiconductive layer 103, surrounding and in contact with the insulating layer 102. Around to the outer semiconductive layer 103 a metal screen and an outer protective sheath (both not illustrated) are provided. The installation of the termination 1 requires the cutting and the removal of the metal screen and the outer sheath at the cable end portion. A part of the outer semiconductive layer 103 may remain protected by a metallic screen 104 outside and, partially, inside the termination 1. In a first lower length A of the cable end portion the outer semiconductive layer 103 lays in a segregating tube 12 of the termination 1 according to the present disclosure. In a second intermediate length B, the outer semiconductive layer 103 is cut and removed and the insulating layer 102 is exposed. In a third upper length C of the cable end portion the insulating layer 102 and the inner semiconducting layer are cut and removed and the electrically conductive core 101 is exposed for the electrical connection to the termination 1.

The termination 1 comprises a tubular insulation body 2 extending along a longitudinal axis X-X between an upper end and a lower end and adapted to house the end portion of the cable 100. The tubular insulation body 2 can be made, e.g., of a ceramic or a polymeric material and can comprise a plurality of fins 5. The tubular insulation body 2 delimits a main chamber 13 intended to be at least partially filled with an electrically insulating fluid, in particular a dielectric oil, such as silicone, or a gas, such as sulfur hexafluoride (SF₆).

The termination 1 comprises a stress cone 9, housed within the tubular insulation body 2, intended for fitting the cable 100 end portion therein. To this purpose, the stress cone 9 defines a through channel for the passage of the cable 100 end portion and comprises a semiconductive portion 11 intended to be in contact with the cable outer semiconductive layer 103 about the interface between the first lower length A and the second intermediate length B thereof. In an embodiment, the stress cone 9 comprises an insulating sleeve 10 at least partially embedding the semiconductive portion 11. The part of the semiconductive portion 11 embedded in the insulating sleeve is the deflector 11a. In the present embodiment, a part 11b of the semiconductive portion 11 extends out of the insulating sleeve 10 at the lower portion of the stress cone 9.

In an embodiment, the stress cone 9 may be made of an elastomeric thermosetting material selected from, for example, silicone rubber, ethylene propylene rubber (EPR) and ethylene propylene diene rubber (EPDM). While the insulating sleeve 10 may be made of sole elastomeric thermosetting material, the semiconductive portion 11 can be made of an elastomeric thermosetting material like that of the insulating sleeve 10 added with a suitable conductive filler, e.g. carbon black.

**The** termination 1 further comprises a pass-through bottom plate 18. The lower end of the tubular insulation body 2 is connected to the pass-through bottom plate 18 thanks to securing means 19. The pass-through bottom plate 18 has a central hole for the passage of the electric cable 100. Sealing gasket/s (not illustrated) may be present.

The termination 1 further comprises a segregating tube 12 coaxially extending within the tubular insulation body 2 and mechanically connecting the stress cone 9 and the pass-through bottom plate 18. In the present embodiment, the segregating tube 12 surrounds and directly contacts the lower portion of the stress cone 9. The segregating tube 12 internally delimits a safety chamber 14, separated from the main chamber 13, which is intended to be free from any electrically insulating fluid. The safety chamber 14 houses the lower portion of the stress cone 9 and the first lower length A of the cable end portion and segregates them from the electrically insulating fluid filling the main chamber 13.

In an embodiment, the segregating tube 12 comprises, at the upper end, a first flange 6 for the mechanical connection with the stress cone 9 and, at the lower end, a second flange 7 for the mechanical connection to the pass-through bottom plate 18. In an embodiment, the first flange 6 is engaged with a counter-flange 8 connected around the lower part of the stress cone 9.

One or more leak-tight elements 15 (for example, an annular gasket) can be interposed between the segregating tube 12 and the stress cone 9 and/ or between the segregating tube 12 and the pass-through bottom plate 18, so as to avoid the fluid to flow from the main chamber 13 into the safety chamber 14.

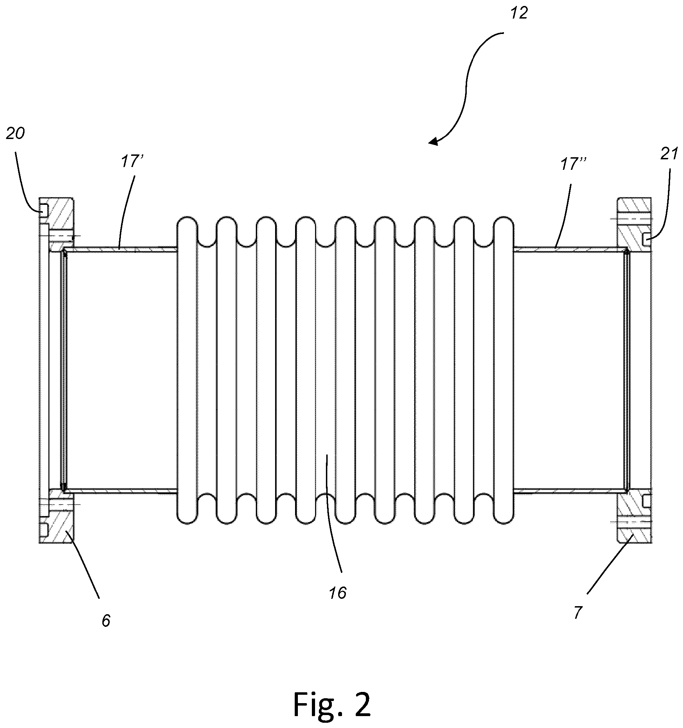

**With** reference to the Figure 2, the segregating tube 12 comprises at least one corrugated portion 16, making the segregating tube 12 flexible in axial direction and in lateral direction. In an embodiment, the segregating tube 12 comprises a single corrugated portion 16 between two opposite smooth portions 17', 17", for example in the middle thereof. The segregating tube 12 can be made in a single piece in the same or different material in different shape at the corrugated portion 16 versus the smooth portions 17', 17", such that they show different mechanical properties. In particular, the smooth portions 17', 17" are more rigid than the corrugated portion 16'. The segregating tube 12 can be made of one or more metals or metal alloys, such as diverse grades of stainless steel.

The first flange 6 and the second flange 7 can be, for example, welded to the smooth portions 17', 17". The first flange 6 can comprise a seat 20 for housing the above-mentioned leak tight element 15. Similarly, the second flange 7 can comprise a seat 21 for arranging another leak-tight element 15 to avoid leakages of the electrically insulating fluid from the tubular insulation body 2 lower end 4 outside the termination 1.

The provision of the cable inside the termination of the present disclosure is carried out according to the following sequential steps:
- a power cable end portion (a single phase thereof) is peeled of, sequentially, outer protective sheath, metal screen, outer semiconductive layer, insulating layer and inner semiconductive layer to obtain a first lower length where the outer semiconductive layer is at least partially exposed, a second intermediate length where the insulating layer is exposed, and a third upper length where the conductive core is exposed;
- the three lengths of the power cable are inserted in a central hole of a pass-through bottom plate;
- a segregating tube having a length at least equal to the first lower length is inserted onto the three lengths of the power cable and fixed onto the pass-through bottom plate;
- a stress cone having a length lower than the second intermediate length is inserted onto the three lengths of the power cable and fixed to the segregating tube;
- the conductive core is connected to a conductive rod (not shown in the figures);
- a tubular insulating body is inserted onto the conductive rod and the three length of the power cable, and it is fixed onto the pass-through bottom plate;
- the insulating fluid is inserted in the main chamber of the tubular insulating body.

## Claims

1. A wet-type outdoor cable termination (1) comprising:
- a tubular insulation body (2) extending along a longitudinal axis (X-X) between an upper end and a lower end and delimiting a main chamber (13) adapted to be at least partially filled with an electrically insulating fluid;
- a pass-through bottom plate (18) mechanically connected to the lower end of the tubular insulation body (2);
- a stress cone (9) housed within the tubular insulation body (2), adapted to be fitted to an end portion of an electric cable (100); and
- a segregating tube (12) coaxially extending within the tubular insulation body (2) between the stress cone (9) and the pass-through bottom plate (18), surrounding and contacting at least a lower portion of the stress cone (9) and defining a safety chamber (14) adapted to partially house the end portion of the electric cable, wherein the segregating tube (12) comprises at least one corrugated portion (16) making the segregating tube (12) flexible.

2. Wet-type outdoor cable termination (1) according to claim 1, wherein the segregating tube (12) is made of a material selected from metallic material or of polymeric material or both.

3. Wet-type outdoor cable termination (1) according to claim 1, wherein the segregating tube (12) is made of a material comprising at least one metal.

4. Wet-type outdoor cable termination (1) according to claim 3, wherein the metal of the segregating tube (12) is amagnetic.

5. Wet-type outdoor cable termination (1) according to claim 1, wherein the segregating tube (12) is made of an electrically conductive material.

6. Wet-type outdoor cable termination (1) according to claim 1, wherein the safety chamber (14) is free from electrically insulating fluid.

7. Wet-type outdoor cable termination (1) according to claim 1, wherein the at least one corrugated portion (16) of the segregating tube (12) is arranged between two opposite smooth portions (17', 17") formed in a single piece with the corrugated portion (16).

8. Wet-type outdoor cable termination (1) according to claim 7, wherein the at least one corrugated portion (16) and the smooth portions (17', 17") of the segregating tube (12) are formed in the same or different material.

9. Wet-type outdoor cable termination (1) according to claim 7, wherein the at least one corrugated portion (16) and the smooth portions (17', 17") are both made of a metal in different alloys or are made of different grades of stainless steel.

10. Wet-type outdoor cable termination (1) according to claim 1, wherein the stress cone (9) delimits a channel for the fitting of the cable (100) end portion and comprises a semiconductive portion (11) and an insulating sleeve (10) partially embedding the semiconductive portion (11), wherein the semiconductive portion (11) is adapted to be at least partially in direct contact with an outer semiconductive layer (103) of the cable (100) end portion.

11. Wet-type outdoor cable termination (1) according to claim 10, wherein the semiconductive portion (11) is fully encircled by the insulating sleeve (10), or the semiconductive portion (11) extends out of the insulating sleeve (10) at the lower portion of the stress cone (9).

12. Wet-type outdoor cable termination (1) according to claim 11, wherein the segregating tube (12) is in direct contact with the insulating sleeve (10) or with the semiconductive portion (11) extending out of the insulating sleeve (10).

13. Wet-type outdoor cable termination (1) according to claim 1, wherein the segregating tube (12) comprises at an upper end (8) a first flange (6) for the mechanical connection to the stress cone (9) and at a lower end a second flange (7) for the mechanical connection to the pass-through bottom plate (18).

14. Wet-type outdoor cable termination (1) according to claims 7 and 13, wherein the first (6) and/or the second (7) flange are welded to the smooth portion/s (17', 17").
